# EUROPEAN PATENT SPECIFICATION

(11) **EP 1 613 985 B1**
(45) Date of publication and mention of the grant of the patent: **14.05.2008**
(21) Application number: 04725676.3
(22) Date of filing: 05.04.2004
(51) Int. Cl.: G02B 1/04, C08G 63/193

(54) **OPTICAL FILMS COMPRISING ONE OR MORE POLYARYLATES OBTAINED FROM SPECIFIC PHENOLIC MOLECULES**
OPTISCHE FILME ENTHALTEND EIN ODER MEHRERE POLYARYLATE ABGELEITET VON SPEZIELLEN PHENOLDERIVATEN
FILMS OPTIQUES COMPRENANT AU MOINS UN POLYARYLATE PRODUIT A PARTIR DE MOLECULES PHENOLIQUES SPECIFIQUES

(30) Priority: 11.04.2003 IT SV20030019
(43) Date of publication of application: 11.01.2006
(73) Proprietor: Ferrania Technologies S.p.A., 17014 Cairo Montenotte, SV (IT)
(72) Inventor: ANGIOLINI, Simone, Ferrania S.p.A., I-17014 Ferrania/Cairo Montenotte (IT); AVIDANO, Mauro, Ferrania S.p.A., I-17014 Ferrania/Cairo Montenotte (IT)
(74) Representative: Bottero, Claudio
(86) International application number: PCT/EP2004/003580
(87) International publication number: WO 2004/090585

(56) References cited:
- EP-A- 0 258 504
- EP-A- 1 205 772
- PATENT ABSTRACTS OF JAPAN vol. 2000, no. 24, 11 May 2001 (2001-05-11) & JP 2001 206863 A (OSAKA GAS CO LTD), 31 July 2001 (2001-07-31)

## Description

### FIELD OF THE INVENTION

The present invention relates to a novel optical film comprising one or more polyarylates obtained from specific bifunctional phenolic molecules. More precisely, the present invention refers to a novel optical film, comprising one or more orthodisubstituted bis(hydroxyphenyl)fluorene bisphenol polyarylates, having an excellent stability to ultraviolet and visible light.

### BACKGROUND OF THE ART

Optical films are well known in the art. Glass has been widely used for several optical applications, due to its excellent characteristics, such as a high transmittance in the visible light range and temperature resistance. Notwithstanding, due to its high weight and very high brittleness, the use of glass as a sublayer or support in optical applications may cause problems to the final product realization. In addition, because glass is not flexible, it cannot be used in continuous processings, this leading to a very low final productivity. In view of-these reasons, it should be desirable to replace glass with transparent polymeric films, such as polyethyleneterephthalate, polymethylmethacrylate or polycarbonate. Even if these materials have good handling properties, they have however the disadvantage of a limited heat resistance and a low glass transition temperature (T_{g}) whereby the employment thereof in optical applications results to be very limited.

Polyesters of 9,9-bis-(4-hydroxyphenyl)-fluorene and isophthalic or terephthalic acid are known in the art. US Patent 3,546,165 describes said polyesters which are thermally stable but generally have a relatively low inherent viscosity and unsatisfactory mechanical properties. US Patent 4,387,209 describes polyesters made by reacting 9,9-bis-(4-hydroxyphenyl)-fluorene with at least one member of the group consisting of isophthalic or terephthalic acid and using an interfacial polymerization process. The polyester inherent viscosity strongly depends upon the monomer purity and relatively small variations in purity of the diphenol monomer may cause large deviations in the inherent viscosity values. Example 2 of US Patent 4,401,803 describes the preparation of polyesters of 9,9-bis-(4-hydroxyphenyl)-fluorene and a 50:50 mixture of isophthalic and terephthalic acid acylic chloride using an interfacial polymerization process. The polyester is precipitated with an acetone-methanol blend to produce a material with an inherent viscosity of 1.67 dl/g. US Patent 4,533,511 discloses a process for spinning fibers obtained from the polycondensation product of 9,9-bis-(4-hydroxyphenyl)-fluorene and a mixture of isophthalic acid chloride and terephthalic acid chloride. Dichloromethane is suggested as a spinning solvent and the solvent precipitant preferably is a mixture of water and lower chain alkanol.

US Patent 4,066,623 discloses that certain aromatic, halogenated polyesters, prepared by inverted interfacial polymerization methods which lead to a polymer having a low content of low molecular weight fractions that, however, cause a low polymer resistance with respect to the solvent.

US 4,967,306 discloses a 9,9-bis-(4-hydroxyphenyl)-fluorene/isophthalic and terephthalic acid polyester which contains a oligomer very low level and has a tensile strength, elongation, chemical resistance, temperature stability, ultraviolet resistance and vacuum stability higher than oligomeric species containing similar copolymers described in the art have. Films containing small amounts of oligomer will "yellow" or degrade upon limited exposure to ultraviolet radiation.

The same polyarylate comprising 9,9-bis-(4-hydroxyphenyl)-fluorene and isophthalic and terephthalic acid is also described in JP patent application 57-192432. However, the resin color tends to the yellow upon exposure to UV radiation due to the diphenol component structure, thus making difficult the use of the resin in optical applications.

The resin obtained from the polyarylate composed of 9,9-bis-(3-methyl-4-hydroxyphenyl)-fluorene and isophthalic acid reported in Journal of Applied Polymer Science, Vol. 29, p. 35 to 43 (1984), being merely composed of isophthalic acid, results to be too fragile and has insufficient abrasion resistance and low film coating quality.

Japanese Patent Application No. 09-071,640 discloses a resin composed of (a) an aromatic dicarboxylic acid, (b) a specific amount of a substituted 9,9-bis-(4-hydroxyphenyl)-fluorene and (c) an aliphatic glycol; said resin is utilized in optical materials for its good transparency and heat resistance.

US 4,810,771 discloses polyesters made of mono-ortho substituted bisphenols, and a blend of isophthalic and terephthalic acid.

EP Patent Application 943,640 describes a film prepared with polyarylates synthesized using bisphenolfluorenes mono- and bi-substituted in the ortho position with alkyl (C1-C4) groups. Such polyarylates have a better stability to ultraviolet radiation.

9,9-bis(3,5-dibromo-4-hydroxyphenyl)-fluorene bisphenol monomer derived polyarylates have been disclosed in PCT Patent Application No. WO 00-33,949 as gas-separation membranes. In US 5,007,945, there is described a polyarylate class obtained from dicarboxylic acid chlorides and cardo-bisphenols having halo-substituents on all ortho positions of the phenol groups, which is used to separate one or more components of a gas mixture. Such patents describe gas-separation membranes, but do not mention optical films obtainable from said polymers.

EP Patent Application 258,504 discloses polyarylate copolymers derived from (A) a mixture of a bis(hydroxyphenyl)fluorene compound with an anthracene bisphenol, and (B) a mixture of isophthalic and terephthalic acid, to improve thermal properties. Said polyarylates can be used to form final products such as films, monofilaments, fibers, injection molded materials, such as machine parts, automobile parts, electrical parts, vessels and springs. The polyarylates find special use as engineering plastics for various uses which require good properties.

Japanese Patent Application No. 2001-206863 provides a series of 9,9'-bis-(phenyl-hydroxyphenyl)-fluorene compounds differing one each other for the position of the phenyl group and of the hydroxyphenyl group, said compounds being all effective for the improvement in the refractive indexes of parts molded for optical uses, and for the heat resistance improvement, water or moisture absorption reduction and mechanical strength improvement of articles molded for the uses of etectronic and electric devices.

The resins, known in the art, obtained from polyarylates composed of 9,9-bis(4-hydroxyphenyl)-fluorene or its ortho mono-substituted homologous, even if having good high temperature resistance characteristics and mechanical properties, are subjected to yellowing when exposed to light sources and can be therefore hardly used in optical applications.

### SUMMARY OF THE INVENTION

The present invention refers to an optical film comprising one or more polyarylates represented by the general structure: 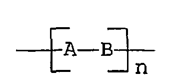 where A represents one or more different bisphenolfluorene units having general formula (I): 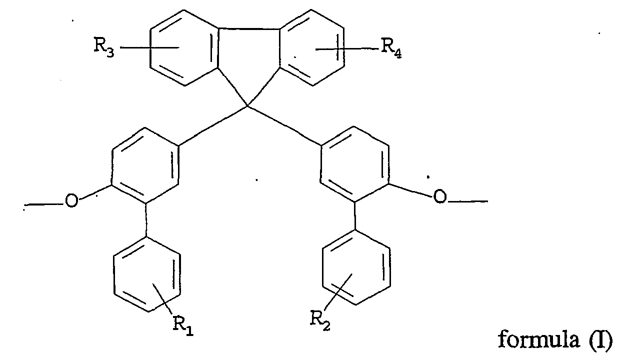 where R₁ and R₂ represent an hydrogen atom, an alkyl group, a halogen, an alkoxy group, an acyl group, a phenyl group or a nitrile group; R₃, and R₄, represent a hydrogen atom, an alkyl group, a halogen, an alkoxy group, an acyl group, a phenyl group, a nitro group, or a nitrile group;
B represents one or more different dicarboxy groups having the formula: 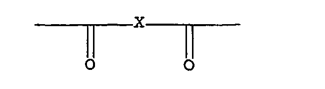 wherein X is a divalent hydrocarbon group having from 1 to 20 carbon atoms, and n is the number of the repeating units which build up the polymer and is a positive integer higher than 20. The optical film of the present invention has excellent mechanical and thermal properties, a high Tg and is not subject to yellowing upon exposure to light sources.

### DETAILED DESCRIPTION OF THE INVENTION

In the above reported formulas, R₁ and R₂ may represent a hydrogen atom; a linear or branched alkyl group having form 1 to 6 carbon atoms, such as e.g. methyl, ethyl, butyl, isopropyl; a halogen atom, such as chlorine, bromine, iodine or fluorine; a linear or branched alkoxy group having from 1 to 6 carbon atoms, such as e.g. methoxyl, ethoxyl, butoxyl; an acyl group having from 1 to 20 carbon atoms, such as e.g. acetyl, propionyl; a phenyl group or a nitrile group; R₃, and R₄ may represent a hydrogen atom, a linear or branched alkyl group, preferably having from 1 to 6 carbon atoms, such as e.g. methyl, ethyl, butyl, isopropyl; a halogen atom, such as chlorine, bromine, iodine or fluorine; a linear or branched alkoxy group, having from 1 to 6 carbon atoms, such as e.g. methoxyl, ethoxyl, butoxyl; an acyl group having from 1 to 20 carbon atoms, such as e.g. acetyl, propionyl; a phenyl group, a nitro group or a nitrile group; X is a bivalent 1 to 20 carbon atom hydrocarbon group, such as e.g. a 6 to 20 carbon atom aromatic group (such as a phenylene, naphthalene or diphenylene group) or a 1 to 20 carbon atom saturated or unsaturated aliphatic group (such as e.g. methylene, ethylene, propylene, butylene).

Preferably, the present invention refers to an optical film comprising one or more polyarylates represented by the following structure: 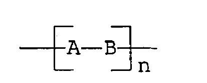 where A represents one or more different bisphenolfluorene units having general formula (II): 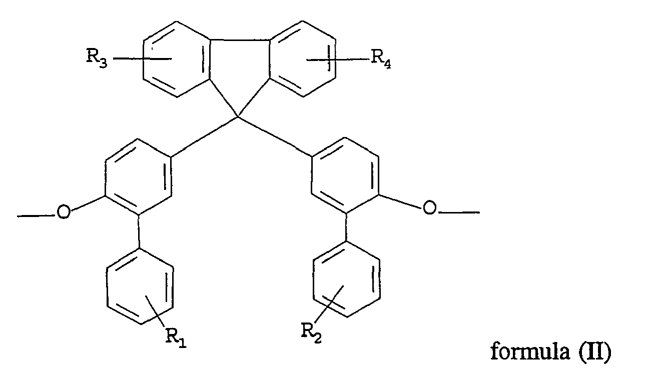 where R₁ and R₂ represent a hydrogen atom, a linear or branched alkyl group having from 1 to 6 carbon atoms, such as e.g. a methyl, ethyl, butyl group, a halogen atom, such as chlorine, bromine, iodine or fluorine;
B represents one or more different dicarboxy groups having the formula: 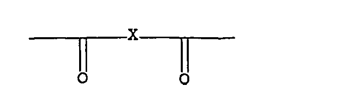 wherein X is a 6 to 20 carbon atom divalent hydrocarbon group, such as the groups represented by: 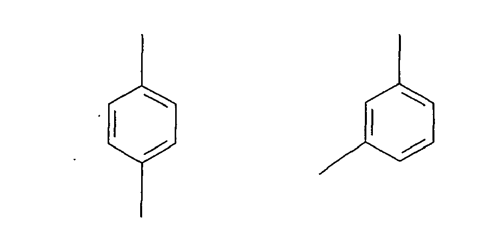 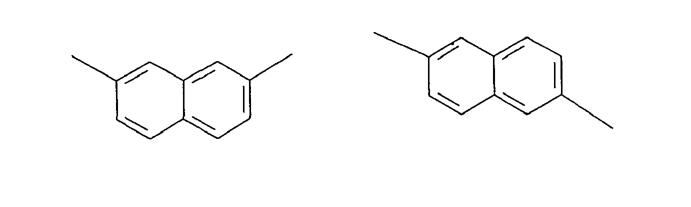 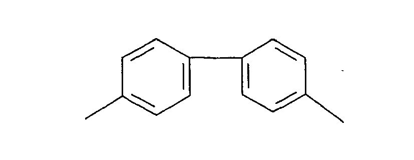 and wherein n is the number of the repeating units which build up the polymer and is a positive integer higher than 20.

More preferably, the optical film of the present invention comprises one or more polyarylates comprising one or more different polymerizable units represented by general formula (III): 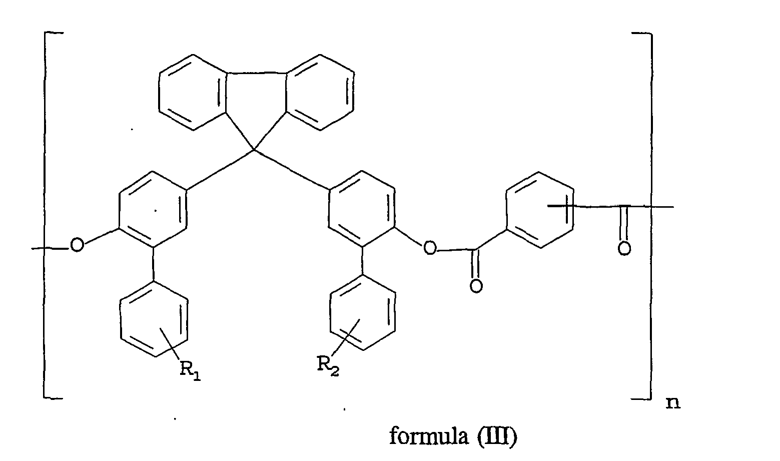 wherein R₁ and R₂ are as defined in formula (II) and n is a positive integer higher than 20. Still more preferably, the present invention refers to an optical film comprising one or more polyarylates comprising at least 2 different polymerizable units represented with 9,9-bis-(4-hydroxyphenyl)-fluorene compounds of general formula (II) and with different dicarboxy compounds, such as isophthalic and terephthalic acid. More preferably, the different dicarboxy compound mixture comprises from 20 to 80 % by weight of an isophthalic group and from 80 to 20% by weight of a terephthalic group.

When in the present invention the term "group" is used to describe a chemical compound or substituent, the described chemical material comprises the group, ring and base residue and that group, ring or residue with conventional substituents. When on the contrary the term "unit" is used, on the unsubstituted chemical material is intended to be included. For instance, the term "alkyl group" comprises not only those alkyl units, such as methyl, ethyl, butyl, octyl, etc., but also those units bearing substituents such as halogen, nitrile, hydroxy, nitro, amino, carboxy, etc. The term "alkyl unit" on the contrary comprises only methyl, ethyl, cyclohexyl, etc.

Polyarylates useful to the present invention are for instance the following compounds, even if the present invention is not limited thereto.

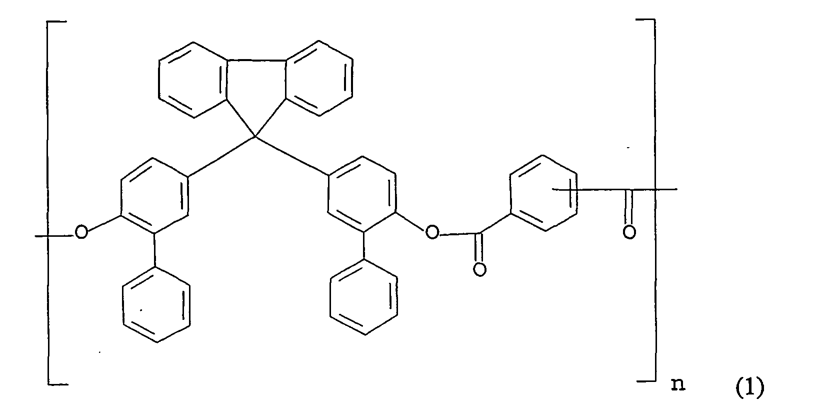

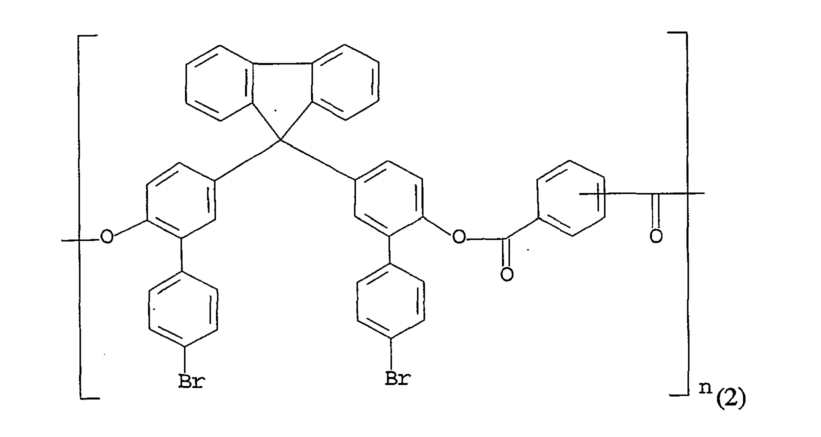

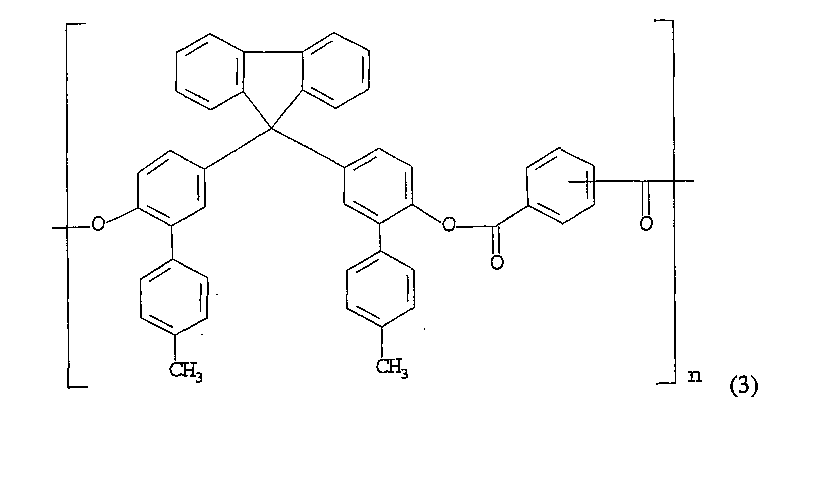

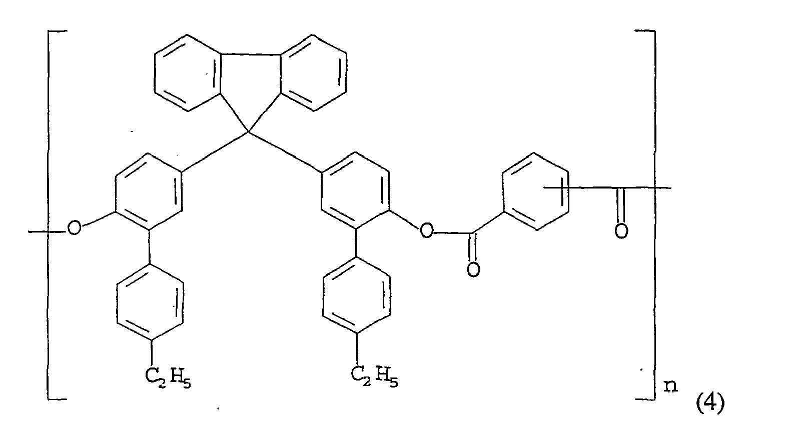

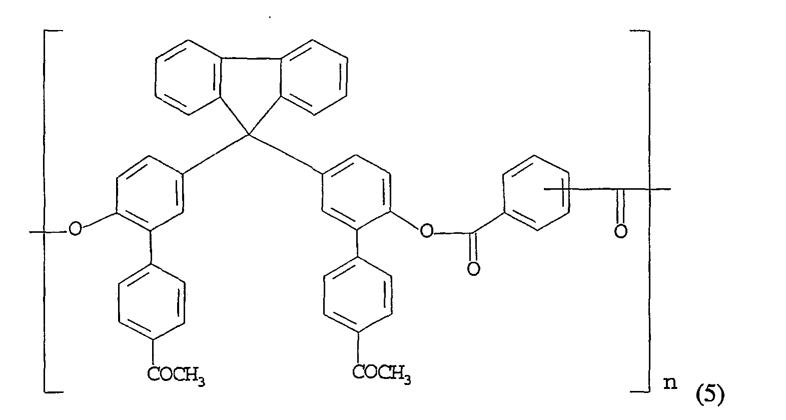

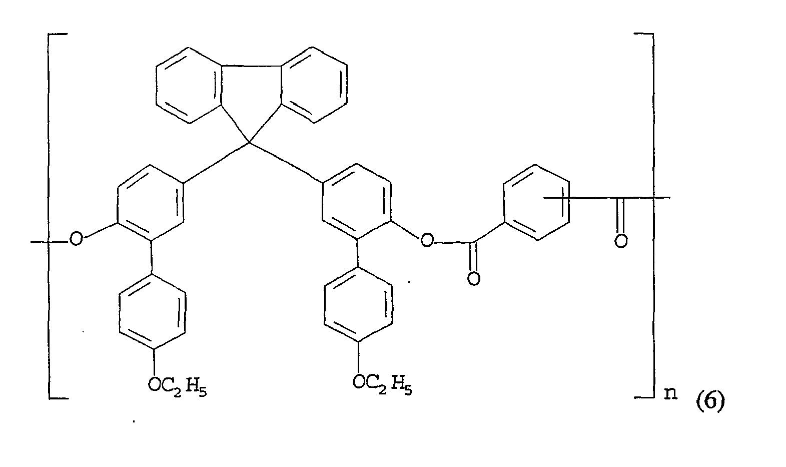

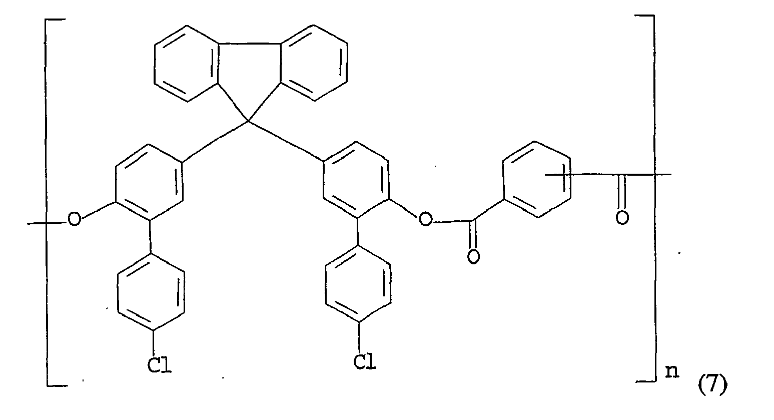

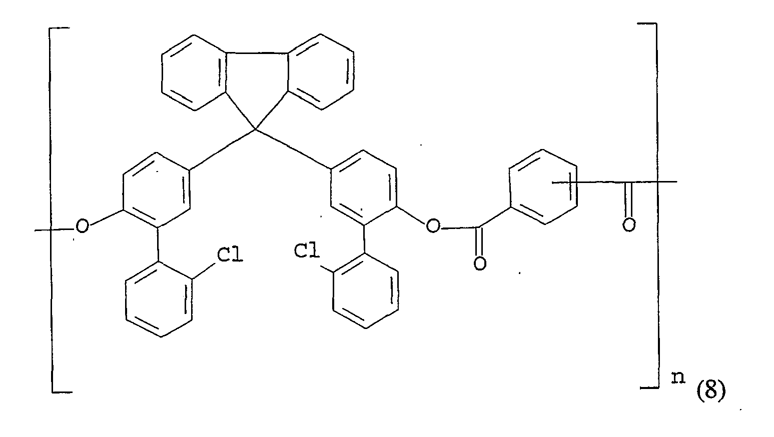

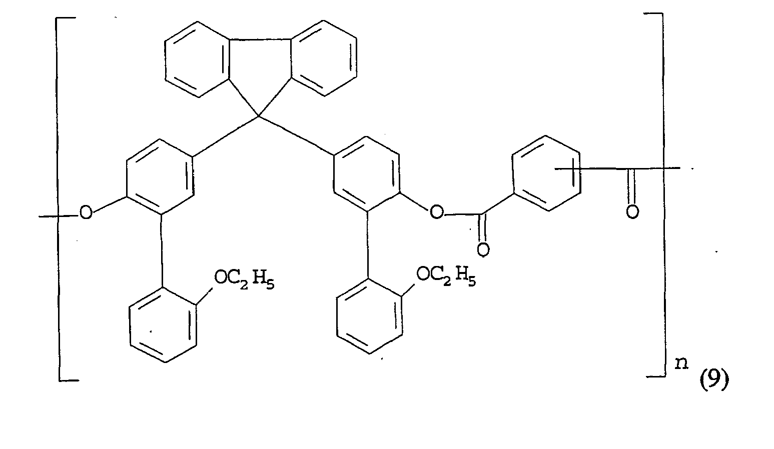

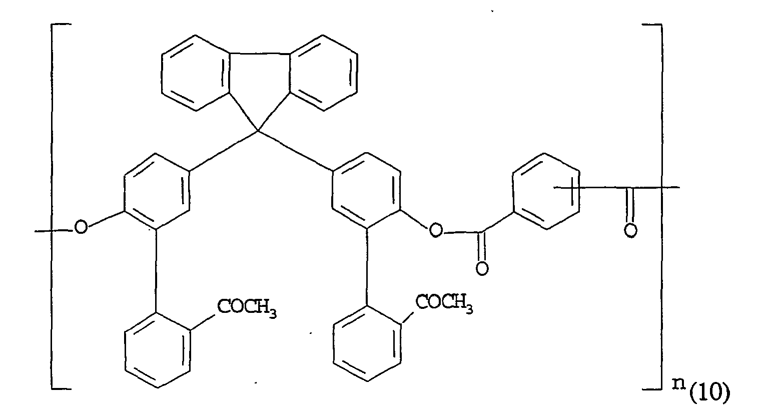

The bisphenolfluorene monomers described in the present invention have been obtained with methods known in the art, such as for instance with the method described in US patent 5,248,838.

The polyarylates used in the present invention can be prepared with methods known in the art: there can be used for instance the solution polymerization method described in Ind. Eng. Chem. 51, 147, 1959, where a bifunctional carboxylic acid acylic dihalide reacts with a bifunctional phenol in an organic solution; the "molten" polymerization method, where a bifunctional carboxylic acid and a bifunctional phenol are heated in the presence of acetic anhydride or diallylcarbonate, as described in JP patent application 38-26299; or the interfacial polymerization method, where a bifunctional carboxylic acid dihalide dissolved in a hydrophobic organic solvent is mixed with a bifunctional phenol dissolved in alkali water solution, as described in J. Polymer Science, XL399, 1959 and in EP patent applications 943;640 and 396,418.

The optical films of the present invention can be obtained with methods known in the art, such as for instance with the solvent coating technique which consists of preparing a polymer solution, herein defined as collodion, in an organic solvent and pouring this solution onto a base, such as metal, glass or plastic material; the film is then obtained after drying the collodion and subsequent release from the base. Generally, organic solvents are used, such as e.g. halogenated solvents (such as methylene chloride, chloroform, tetrachloroethane, dichloroethane, etc.) or other solvents such as N-methylpyrrolidone, N,N-dimethylformamide, dioxane, tetrahydrofurane, etc.

Other methods known in the art than can be used to obtain the films of the present invention are the one known as "spin coating", where the collodion is poured onto a quick-rotating base, or the hot extrusion or hot lamination methods, which are based on a molten polymer processing.

The thickness of the optical film of the present invention ranges from 0.1 to 1000 µm, preferably from 1 and 1000 µm.

The optical film of the present invention shall be highly transparent and have the slightest possible amount of impurities or surface or inside defects such as not to cause interference with the light radiation passing through it. To obtain such properties, it is advisable to filter the collodion with techniques known in the art, by using filters with pores having sizes of less than 10 µm, preferably than 1 µm, more preferably than 0.1 µm.

The optical film object of the present invention may have additional protective layers on one or both surfaces in order to improve some of its characteristics, such as for example solvent resistance, gas and water vapor permeability, mechanical properties, surface scratch resistance, light rations resistance. The protective layers may consist of organic or inorganic materials or mixtures thereof and can be applied with techniques known in the art, such as for instance the solvent coating technique (described in US patents 4,172,065; 4,405,550; 4,664,859 and 5,063,138), the vacuum coating technique (described e.g. in US patents 4,380,212; 4,449,478; 4,485,759 and 4,817,559), the lamination technique (described e.g. in US patents 4,844,764; 5,000,809; 5,208,068 and 5,238,746) or resin reticulation with an electron beam or an ultraviolet radiation, as described e.g. in WO application 96-24,929 and JP 02-260145.

The optical film of the present invention, at the inside or in additional layers thereof, may contain ultraviolet radiation stabilizers, such as for instance benzophenone compounds (e.g., hydroxy-dodecyloxy benzophenones, 2,4-dihydroxybenzophenones, and the like), triazole compounds (e.g., 2-phenyl-4-(2',2'-dihydroxybenzoyl)-triazole, substituted hydroxyphenyl-tri-azoles, and the like), triazine compounds (e.g., hydroxyphenyl-1,3,5-triazine, 3,5-dialkyl-4-hydroxyphenyl-triazine, and the like), benzoate compounds (e.g., diphenolpropane dibenzoate, diphenolpropane tert.-butylbenzoate, and the like), sterically hindered amine and other compounds like those described for instance in US patents 4,061,616 and 5,000,809.

The optical film of the present invention, in the inside or additional layers thereof, may also contain transparent pigments to improve the film durability, such as for instance metal oxides (e.g. titanium dioxide, zinc oxide, iron oxide), metal hydroxides, chromates, carbonates, and the like, such as those described for instance in US patent 5,000,809. In addition, the optical film of the present invention may also contain slippering agents (such as the wetting agents described in JP patent application 02-260,145) and antioxidizing and stabilizing substances, such as e.g. sterically hindered phenol antioxidizers, organic and inorganic phosphites, orthohydroxybenzotriazoles or antistatic agents to decrease static charge storage and the consequent attraction of powder onto the optical film.

The optical films of the present invention can be widely used in the optical application field, such as for instance as a support or protective layer for liquid crystal screens, in the supports and protective layers for electroluminescent screens, in the supports and protective layers for flat screens electroluminescent polymer based, in the polarizer transparent conducting films, and similar applications due to their good mechanical properties, such as dimensional stability, further to being completely amorphous and transparent and having a high heat and Tg resistance.

The present invention is now illustrated by reference to the following examples which however are not construed as limiting it.

### Examples

### Synthesis of 9,9-bis(3-phenyl,4-hydroxyphenyl)fluorene (Compound 1)

In a 2000 ml four necked flask equipped with stirrer, reflux condenser and thermometer, 130.0 g (0.721 moles) of 9-fluorenone (Rütgers Organics GmbH, purity > 98%) were charged together with 251.7 g of 2-phenyl phenol (1.479 moles) (Aldrich, purity > 98%). 520 ml of toluene were added and the mixture was stirred to dissolve all the reactants. Then 1.53 ml (0.0144 moles) of 3-mercaptopropionic acid (Aldrich, purity > 99%) and 94.5 ml (0.984 moles) of methanesulfonic acid (Elf Atochem, purity > 98%) were charged in the flask. The methanesulfonic acid was dripped into the reaction solution in two hour. During the dripping the internal temperature increased to 40-42°C in 30 min. (external cooling was necessary to limit the internal temperature at this value). At the end of this exothermic step an external heating was provided in order to maintain 40°C into the reaction vessel. The precipitation of the 9,9=bis(3-phenyl,4-hydroxyphenyl)fluorene started after 90-120 min. The reaction was completed after 18 hours. After cooling at room temperature in 1-2 hours, the product was then filtered and washed with fresh toluene (two washes with 50 ml each step). The crude product appeared like a white-greenish solid.

In a 6000 ml four necked flask equipped with stirrer, reflux condenser and thermometer, 427 g of crude 9,9-bis(3-phenyl,4-hydroxyphenyl)fluorene obtained, wet by toluene (weight loss of ca. 10% at 160°C) were dispersed at room temperature with 3500 ml of acetone. The dispersion was then warmed to the reflux temperature, obtaining a clear, green/orange solution. The reactor was then cooled at 0°C and kept at this temperature for at least 4 hours. The product began its precipitation when the internal temperature was close to 50°C. The crystallization mixture was then filtered on a vacuum funnel, washed with fresh acetone and dried at room temperature under vacuum for at least 2 hours, giving a completely white product. The solid was dried overnight in a vacuum oven at the temperature of 110°C. The resulting solid had a weight loss at 160°C lower than 0.1 % by weight. The final yield was 74%.

### Example 1

Reference film 1 was obtained by taking compound 1 and polymerizing it with the interfacial polycondensation technique as described in EP patent 396,418, utilizing a mixture of 50 mole-% of terephthalic and isophthalic acids. The so-obtained polymer was coated with the solvent coating technique using a 10% weight methylene chloride solution of the polymer. The film was then dried for 3 hours at a temperature of 25°C, gradually increasing the temperature up to a maximum of 160°C.

Comparison films 2 to 9 were obtained with the same procedure, but using compounds A to H, respectively.

Film samples 1 to 6 were then subjected to UV ageing tests by using a Fusion F300 Lamp System produced by Fusion UV Systems Inc. equipped with a D bulb and a 2 mm thick glass pyrex filter interposed between the UV source and the samples.

Sample film yellowing was measured by comparing their absorbance, before and after the expositions, at the selected wavelength of 400nm which was identified as the most significant (blue light absorption). Optical absorbance was measured by a Perkin-Elmer Lambda 2 spectrophotometer working in the 320-500 nm range. A pyrex glass filter is used to cut the lamps emission below 300nm. The Yellowing Coefficient (Yc) is defined as the ratio of the averaged variation of absorbance of a polymeric film exposed to a UV radiation source and the effective exposure energy. The reported Variation of Absorbance ΔA was measured after an effective exposure energy of 4.8 J/cm². The lower the value, the best the result.

The results were summarized in the following Table 1.

**TABLE 1**

| Sample | Yc | ΔA |
|---|---|---|
| Film 1 (Invention) | 0.000553 | 0.00300 |
| Film 2 (Comparison) | 0.005465 | 0.02594 |
| Film 3 (Comparison) | 0.002686 | 0.01268 |
| Film 4 (Comparison) | 0.002013 | 0.00992 |
| Film 5 (Comparison) | 0.002304 | 0.01020 |
| Film 6 (Comparison) | 0.001845 | 0.00823 |
| Film 7 (Comparison) | 0.001739 | 0.00772 |
| Film 8 (Comparison) | 0.001590 | 0.00754 |
| Film 9 (Comparison) | 0.000710 | 0.00316 |

The data reported in Table 1 shows that comparison films 2 to 9 dramatically increases the ΔA values with the consequence of an increase of the Yc and the formation of an undesired strong yellow coloration. On the contrary, film 1 of the present invention had a very little increase of ΔA and very low Yc.

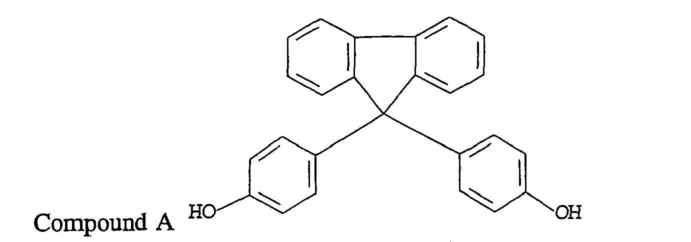

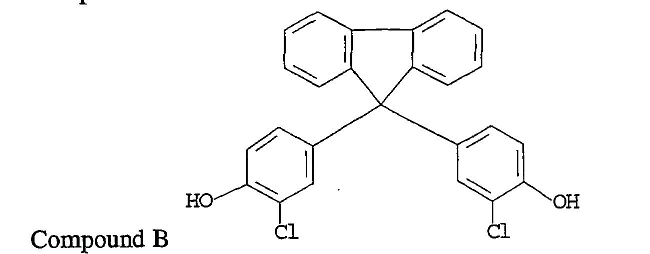

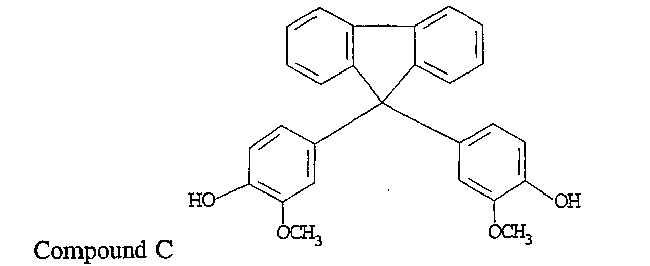

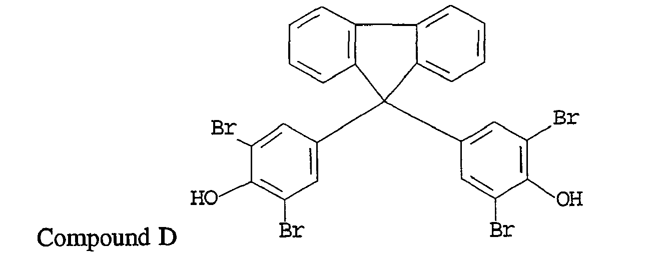

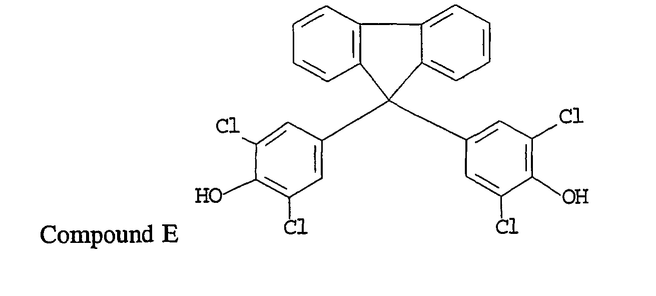

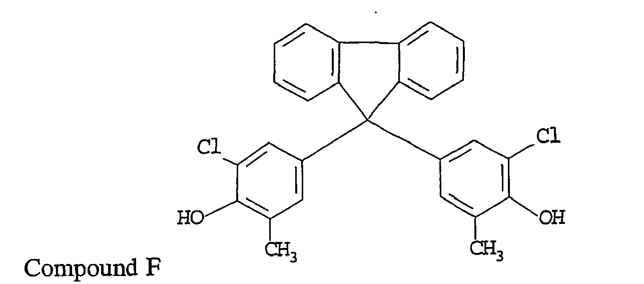

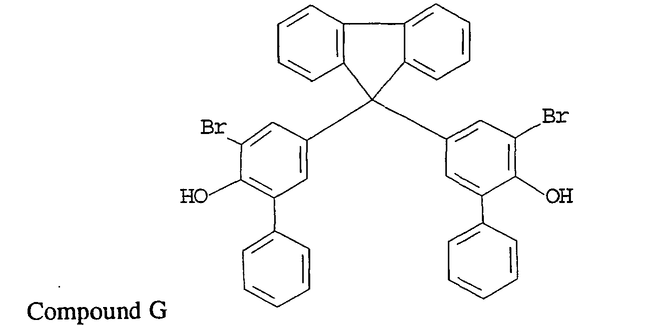

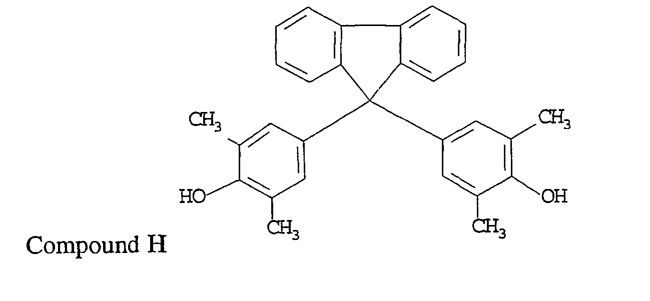

## Claims

1. An optical film comprising one or more polyarylates represented by the following structure: 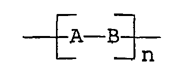 where A represents one or more different bisphenolfluorene units having general formula (I): 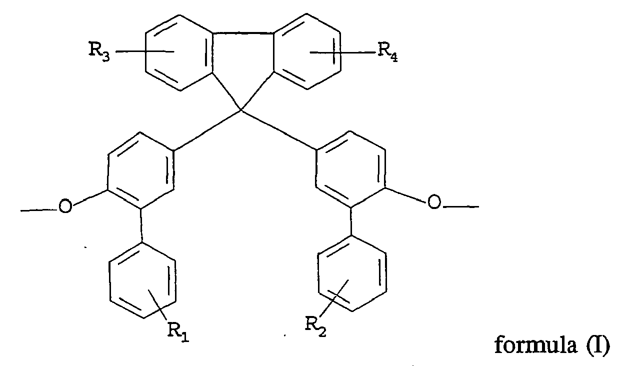 wherein R₁ and R₂ represent an hydrogen atom, an alkyl group, a halogen, an alkoxy group, an acyl group, a phenyl group or a nitrile group; R₃, and R₄, represent a hydrogen atom, an alkyl group, a halogen, an alkoxy group, an acyl group, a phenyl group, a nitro group, or a nitrile group;
where B represents one or more different dicarboxy groups having the formula: 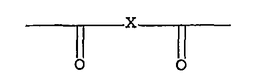 wherein X is a divalent hydrocarbon group having from 1 to 20 carbon atoms, and
where n is the number of the repeating units which build up the polymer and is a positive integer higher than 20.

2. The optical film of claim 1, where said bisphenolfluorene units A are represented by the formula: 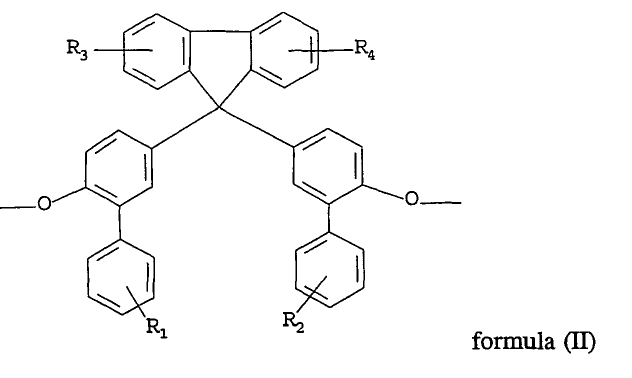 wherein R₁ and R₂ represent a hydrogen atom, a linear or branched alkyl group having from 1 to 6 carbon atoms, and a halogen atom; and
where said dicarboxy groups B are represented by the formula: 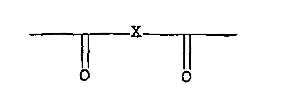 wherein X is a 6 to 20 carbon atom divalent hydrocarbon group.

3. The optical film of claim 1, wherein X is represented by a group selected among:

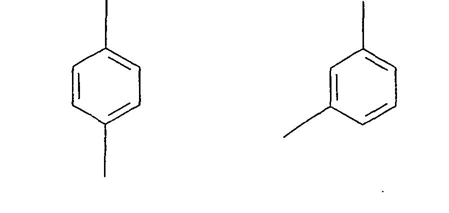

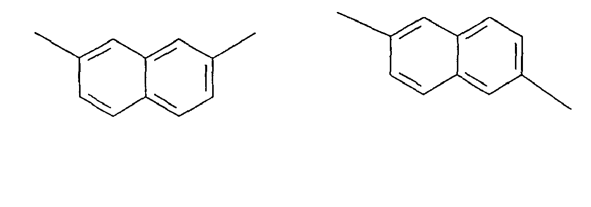

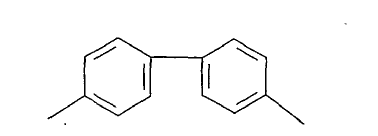

4. The optical film of claim 1, wherein said one or more polyarylates are represented by the formula: 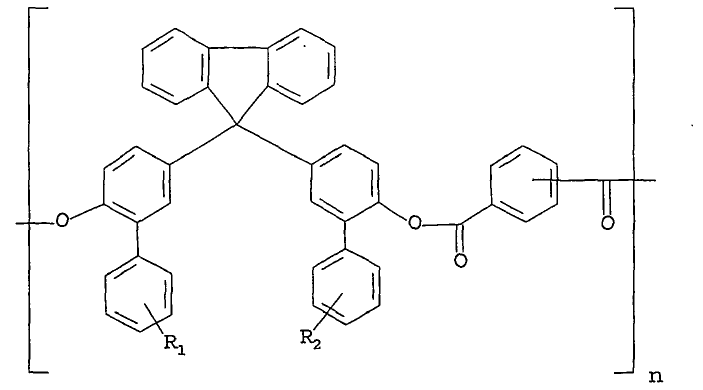 wherein R₁ and R₂ represent a hydrogen atom, a linear or branched alkyl group having from 1 to 6 carbon atoms, and a halogen atom; and
where n is a positive integer higher than 20.

5. The optical film of claim 4, wherein said one or more polyarylates comprise at least two different units, the former comprising isophthalic acid and the latter terephthalic acid.

6. The optical film of claim 5, wherein the at least two different units comprise from 20 to 80% by weight of isophthalic acid and from 80 to 20 % by weight of terephthalic acid.

7. The optical film of claim 1, where such one or more polyarylates are selected among: 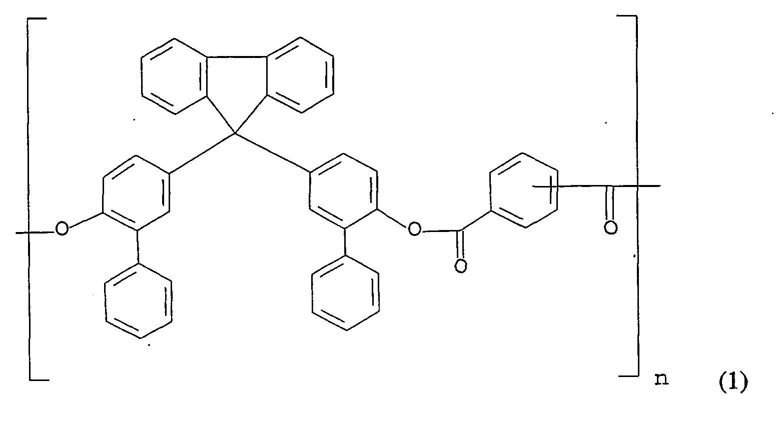 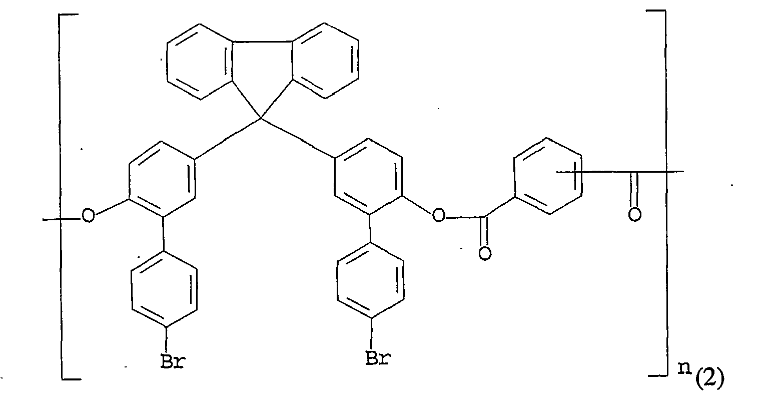 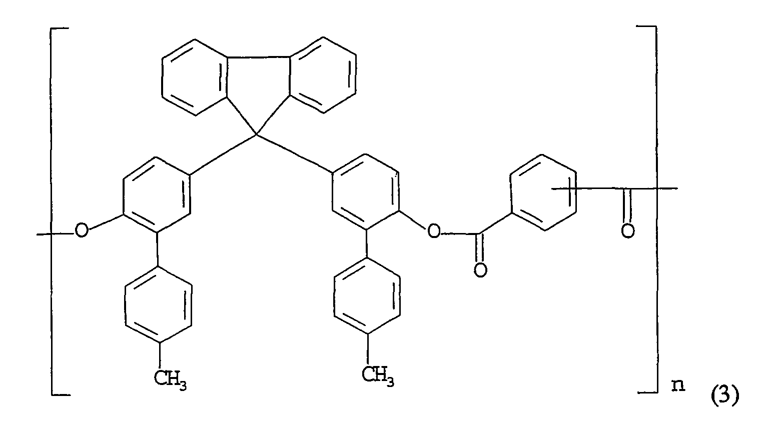 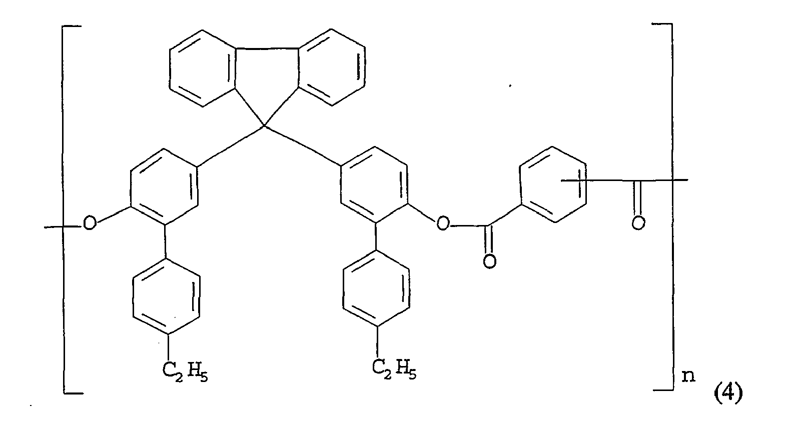 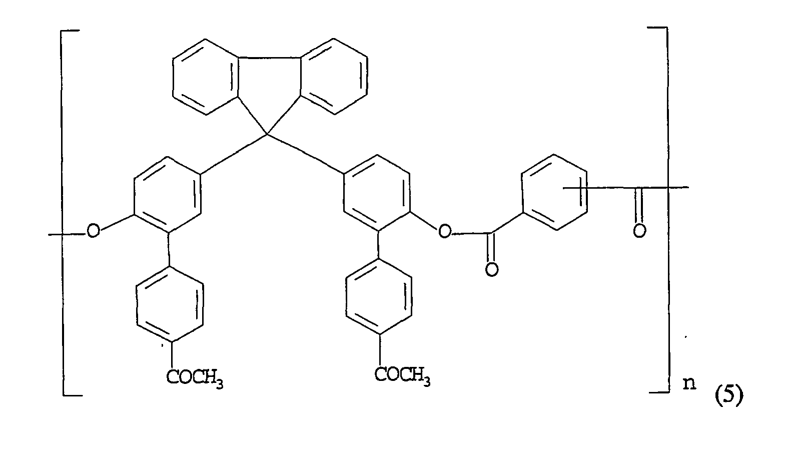 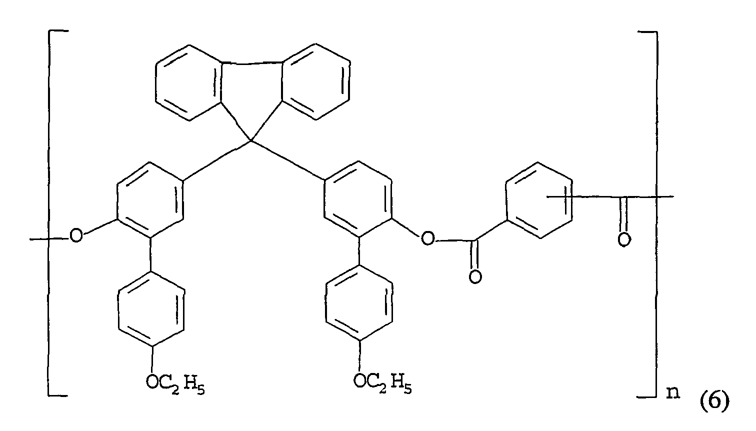 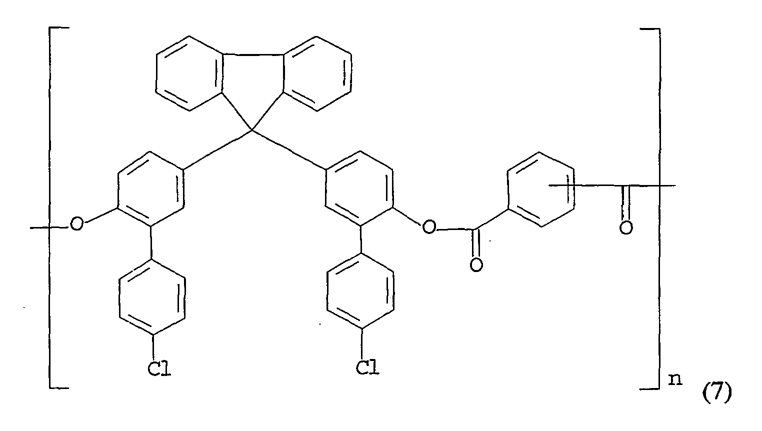 where n is a positive integer higher than 20.

## Patentansprüche

1. Optischer Film, umfassend ein oder mehrere Polyarylate, dargestellt durch die folgende Struktur: 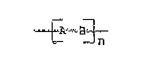 wobei A eine oder mehrere verschiedene Bisphenolfluoreneinheiten mit der allgemeinen Formel (I) darstellt; 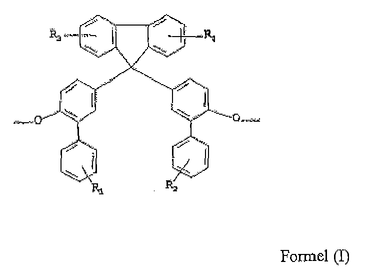 wobei R₁ und R₂ ein Wasserstoffatom, eine Alkygruppe, ein Halogen, eine Alkoxygruppe, eine Acylgruppe, eine Phenylgruppe oder eine Nitrilgruppe darstellen; R₃ und R₄ ein Wasserstoffatom, eine Alkygruppe, ein Halogen, eine Alkoxygruppe, eine Acylgruppe, eine Phenylgruppe, eine Nitrogruppe oder eine Nitrilgruppe darstellen; wobei B ein oder mehrere Dicarboxygruppen darstellt mit der Formel: 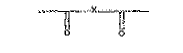 wobei X eine divalente Kohlenwasserstoffgruppe mit 1 bis 20 Kohlenstoffatomen ist, und wobei n die Anzahl an sich wiederholenden Einheiten ist, die das Polymer aufbauen, und eine positive ganze Zahl größer als 20 ist.

2. Optischer Film nach Anspruch 1, wobei die Bisphenolfluoreneinheiten A dargestellt sind durch die Formel: 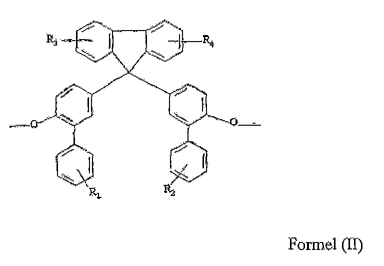 wobei R₁ und R₂ ein Wasserstoffatom, eine lineare oder verzweigte Alkylgruppe mit 1 bis 6 Kohlenstoffatomen, und ein Halogenatom darstellen; und
wobei die Dicarboxygruppen B dargestellt sind durch die Formel: 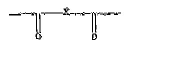 wobei X eine divalente Kohlenwasserstoffgruppe mit 6 bis 20 Kohlenstoffatomen ist.

3. Optischer Film nach Anspruch 1, wobei X dargestellt ist durch eine Gruppe, ausgewählt aus:

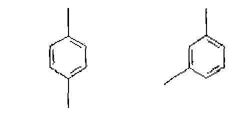

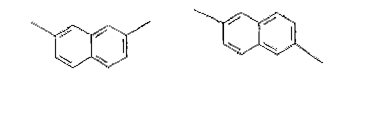

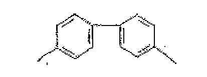

4. Optischer Film nach Anspruch 1, wobei das eine oder mehrere Polyarylate dargestellt sind durch die Formel: 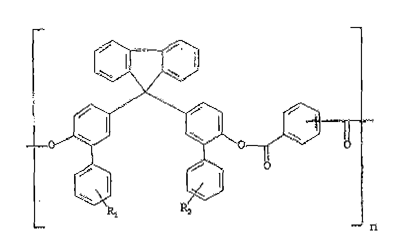 wobei R₁ und R₂ ein Wasserstoffatom, eine lineare oder verzweigte Alkylgruppe mit 1 bis 6 Kohlenstoffatomen, und ein Halogenatom darstellen; und
wobei n eine positive ganze Zahl größer als 20 ist.

5. Optischer Film nach Anspruch 4, wobei das eine oder mehrere Polyarylate wenigstens zwei verschiedene Einheiten umfassen, wobei die ersteren Isophthalsäure und die letzteren Terephthalsäure umfassen.

6. Optischer Film nach Anspruch 5, wobei die wenigstens zwei verschiedenen Einheiten 20 bis 80 Gew.-% Isophthalsäure und 80 bis 20 Gew.-% Terephthalsäure umfassen.

7. Optischer Film nach Anspruch 1, wobei ein solches ein oder mehrere Polyarylate ausgewählt sind aus: 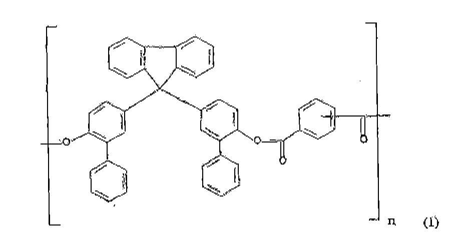 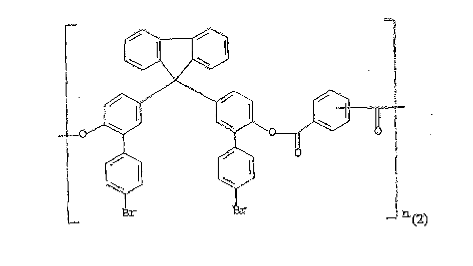 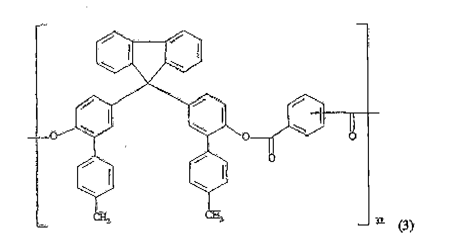 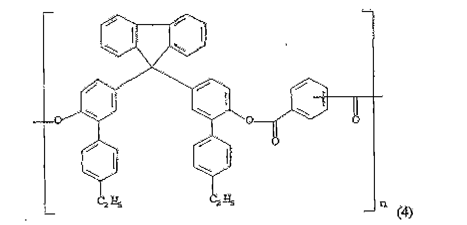 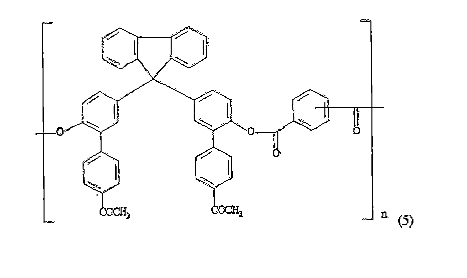 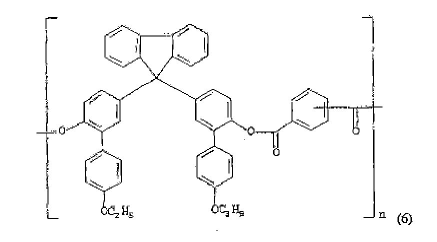 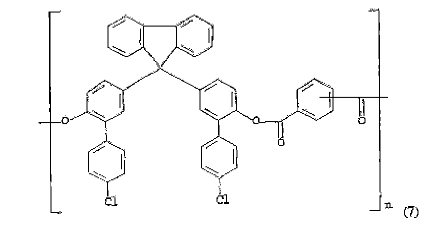 wobei n eine positive ganze Zahl größer als 20 ist.

## Revendications

1. - Un film optique comprenant un ou plusieurs polyacrylates représentés par la structure sulvante : 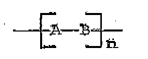 dans laquelle (A) représente une ou plusieurs unités différentes de bisphénol fluorène ayant la formule générale (I) : 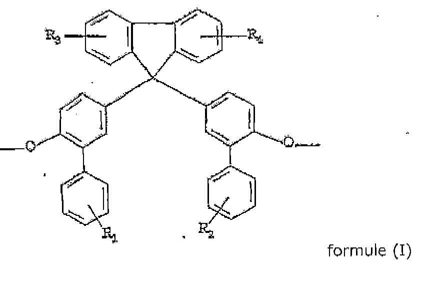 dans laquelle R₁ et R₂ représentent un atome d'hydrogène, un groupe alkyle, un halogène, un groupe alcoxy, un groupe acyle, un groupe phényle ou un groupe nitrile ; R₃ et R₄ représentent un atome d'hydrogène, un groupe alkyle, un halogène, un groupe alcoxy, un groupe acyle, un groupe phényle, un groupe nitro ou un groupe nitrile ; B représente un ou plusieurs groupes dicarboxyliques différents ayant la formule : 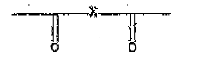 dans laquelle X est un groupe hydrocarboné divalent ayant de 1 à 20 atomes de carbone et n est le nombre d'unités répétitives qui constituent le polymère et est un nombre entier positif supérieur à 20.

2. - Le film optique selon la revendication 1, dans lequel lesdites unités de bisphénolfluorène A sont représentées par la formule : 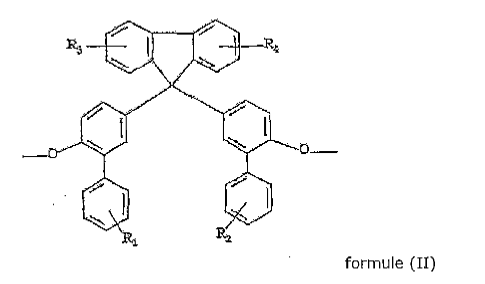 dans laquelle R₁ et R₂ représentent un atome d'hydrogène, un groupe alkyle linéaire ou ramifié ayant entre 1 à 6 atomes de carbone et un atome d'halogène ; et lesdits groupes dicarboxy B sont représentés par la formule : 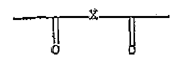 dans laquelle X est un groupe hydrocarboné divalent ayant de 6 à 20 atomes de carbone.

3. - Le film optique selon la revendication 1, dans lequel X est représenté par un groupe choisi parmi :

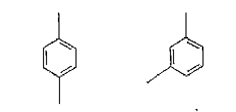

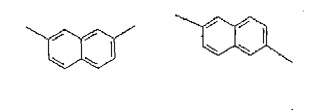

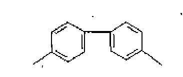

4. - Le film optique selon la revendication 1, dans lequel lesdits un ou plusieurs polyarylates sont représentés par la formule : 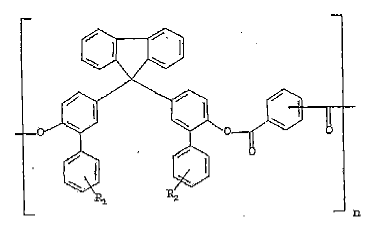 dans laquelle R₁ et R₂ représentent un atome d'hydrogène, un groupe alkyle linéaire ou ramifié ayant entre 1 et 6 atomes de carbone et un atome d'halogène, n étant un nombre entier positif supérieur à 20.

5. - Le film optique selon la revendication 4, dans lequel lesdits un ou plusieurs polyarylates comprennent au moins deux unités différentes, la première comprenant l'acide isophtalique et la dernière l'acide téréphtalique.

6. - Le film optique selon la revendication 5, dans lequel lesdits au moins deux unités différentes comprennent entre 20 et 80% en poids d'acide isophtalique et entre 80 et 20% en poids d'acide téréphtalique.

7. - le film optique selon la revendication 1, dans lequel lesdits un ou plusieurs polyarylates sont choisis parmi : 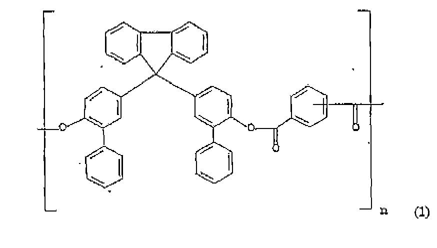 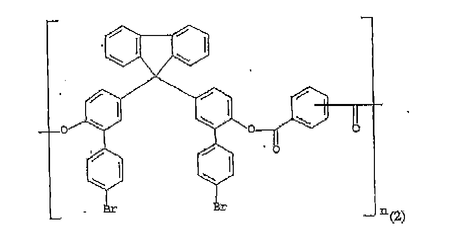 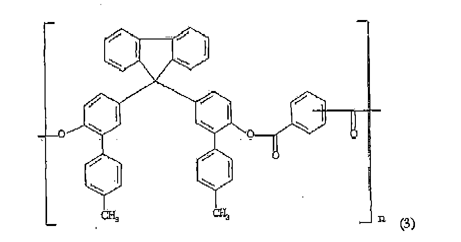 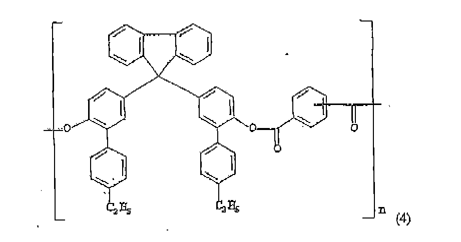 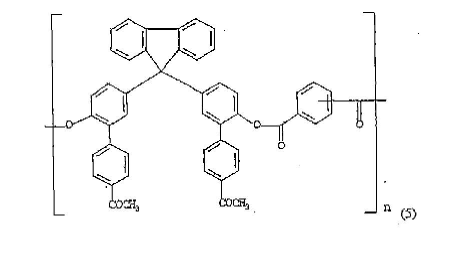 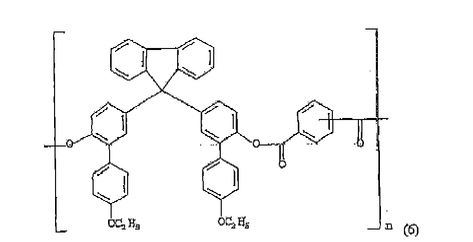 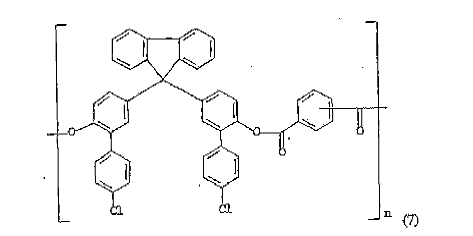 dans lesquelles n est un nombre entier positif supérieur à 20.
